Europäisches Patentamt

European Patent Office

Office européen des brevets

(11) Publication number:

**0 148 809**

**B1**

## (12) EUROPEAN PATENT SPECIFICATION

(45) Date of publication of patent specification: **12.10.88**

(51) Int. Cl.⁴: **F 16 H 49/00**

(21) Application number: **85730001.6**

(22) Date of filing: **08.01.85**

(54) Motion transmitting device between two coaxial rotating members.

(30) Priority: **10.01.84 IT 6701584**

(43) Date of publication of application:
**17.07.85 Bulletin 85/29**

(45) Publication of the grant of the patent:
**12.10.88 Bulletin 88/41**

(84) Designated Contracting States:
**CH DE FR GB LI SE**

(56) References cited:
**EP-A-0 122 208**
**DE-A-2 143 662**
**FR-A-1 518 051**

(73) Proprietor: **U.T.A.S. S.p.A.**
**Via Torino 22**
**I-10044 Pianezza (IT)**

(72) Inventor: **Cordara, Oscar**
**Piazza T. Campanella 15**
**Turin (IT)**

(74) Representative: **Wey, Hans-Heinrich, Dipl.-Ing.**
**Patentanwälte Wey & Partner**
**Widenmayerstrasse 49**
**D-8000 München 22 (DE)**

Courier Press, Leamington Spa, England.

## Description

This invention relates to a motion transmitting device between a motor shaft rotated by an electric motor and a driven shaft coaxial with said motor shaft, comprising a frame housing said electric motor, a stationary rigid disk having an annular portion toothed with a predetermined pitch, a relatively flexible disk secured to said driven shaft and having an annular portion toothed with a pitch slightly different from said predetermined pitch, the flexible disk being located in such a position as to hold its toothed annular portion normally disengaged from the toothed annular portion of said rigid disk, a member secured to said motor shaft and carrying at least one roller rotatable on an axis substantially parallel to the plane of the annular portion of said rigid disk to engage the face of said flexible disk opposite its annular portion for causing a sector of said flexible disk to yield in a direction perpendicular to said plane and to engage a corresponding sector of the annular portion of said rigid disk.

Several transmitting devices of the type in question are known, wherein the gear means are normally housed in a sealed box immersed in a lubricant liquid. In a first type, the gear means include a group of intermeshed gear wheels, the number of which is rather large when a high motion reducing ratio is required. Taking into account the other components required by such a device, i.e. rolling element bearings, shafts and other mounting means, this device results in being very intricate and requires a rather large box. Consequently the device is very expensive with regard to the manufacture of both the gears and the box with the above mentioned components. In addition, the engagement of each pair of gears requires a minimum gap, whereby the total lost motion between the driving member and the driven member could be rather high.

To avoid this disadvantage, it has been proposed to divide at least one gear of each pair into two parts on a plane perpendicular to its axis and to connect the two parts with a torsional spring. The gap between the engaging teeth is thus removed in one direction by one of said parts and in the opposite direction by the other part of the gear. This provision, while removing most of the lost motion, does not reduce the encumbering of the box and results in being far more expensive.

A motion transmitting device is also known wherein a pair of cylindrical members are toothed according to slightly different pitches and engage each other in limited sectors thereof. In this device, one of the two toothed members is radially flexible and is located inside the other toothed member. This device has the disadvantage of requiring rather large flexing displacement to limit the length of the engaging sector. In addition, since it yields radially with respect to the axis of the device, it produces undesired vibrations on the driven member.

Finally, a motion reducing device as mentioned in paragraph 1 of the description is known in the DE—OS 21 43 662, wherein a rigid bevel gear with a preferably obtuse vertex angle and a flexible disk disposed coaxially to said bevel gear are provided, wherein one of these parts is rotatable relative to the other, and wherein at least one pressing device, especially a roller, is provided on a coaxial drive shaft or the like to urge the peripheral area of said flexible disk onto the peripheral area, formed by the conical portion, of said bevel gear, wherein, upon the revolving motion of the pressing roller of the like, areas of the disk are pressed which each have a larger diameter in the undeformed state than the corresponding portion of the bevel gear against which these areas are urged, and wherein a positive and/or frictional connection is formed between the disk and the conical portion of the bevel gear when the respective sector is pressed. A disadvantage of such a device is that is not protected by any closed structure and cannot be properly lubricated.

The technical problem to be solved by the invention is to provide a motion transmitting device requiring a minimum of space, capable of being properly lubricated for operation and also capable of obtaining a very high motion-reducing ratio free of vibrations and at reasonable cost.

This problem is solved, according to the invention, by a device having the features mentioned in the characterizing part of claim 1.

It is evident that the flexible disk is not deformable in the plane perpendicular to the common axis of the two members, whereby it is not subject to vibrations.

An advantage of the device according to the invention is that of requiring an electric motor which is capable of rotating at a high rate of revolutions per minute and which is very light and small in size. Therefore, a driver including such a motor and the motion transmitting device of the invention is very useful for the various movements of modern industrial robots, where each arm is moved in various directions to effect specific repeated manipulations.

Other features according to the invention are the subject of the subclaims.

A preferred embodiment of the device according to the invention is shown in Figures 1—3 of the drawings and is described below.

Figure 1 shows a sectional view of a motion transmitting device according to the invention;

Figure 2 shows a partial view of a detail of Figure 1 on an enlarged scale;

Figure 3 shows a circumferential partial view of the detail of Figure 2, taken along the line III—III thereof.

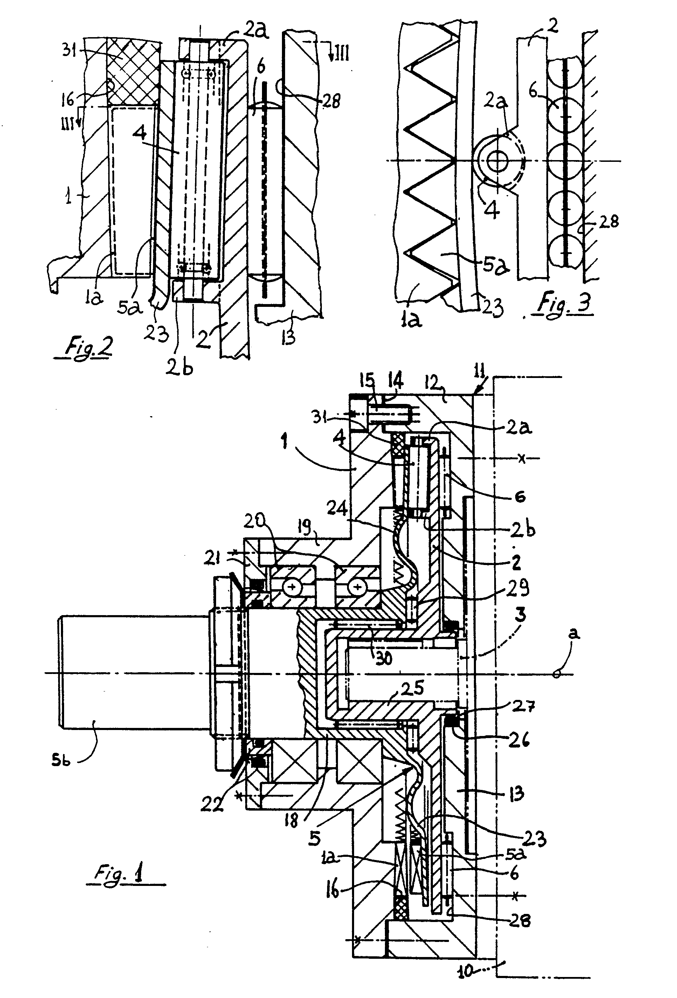

With reference to Figure 1, the numeral 10 indicates generically, in phantom lines, the frame of an electric motor which includes a driving shaft 3, rotatable on an axis a. The motion transmitting device includes a driven shaft 5b rotatable on the same axis a, whereby the shaft 5b and the shaft 3 are coaxial.

Secured to the frame 10 of the motor is a cylindrical box 11 having a cylindrical wall 12 and a circular bottom 13. A circular rigid disk 1 is secured to the end edge 14 of the wall 12 by means of a set of screws 15. The disk 1 is provided with an inner planar face 16 (Figure 2) perpendicular to the axis a, having a ring portion in the form of a planar gear 1a, having a number Z2 of teeth spaced according to a predetermined pitch P. Secured to the disk 1 is a distancing ring 31. Integral with the driven shaft 5b (Figure 1) is a toothed member, generically indicated by the numeral 5, which includes a hollow cylindrical portion 18 rotatably mounted by means of a pair of rolling element bearings 20, on a sleeve 19 integral with the rigid disk 1.

A flange 21 and suitable gasket means 22 seal the sleeve 19 on the portion 18.

Integral with the free end of the hollow portion 18 is a flexible disk 23 having an annular portion 24 with corrugations concentric to the axis a. A circular ring portion of the disk 23 is in the form of a planar gear 5a facing the gear 1a and having a number Z1 of teeth slightly different from the number Z2 of teeth of the gear 1a, for example Z2=Z1−1. Therefore, the pitch of the teeth of the gear 5a differs from the pitch P by

$$\Delta P = 2\pi \cdot \left(\frac{1}{Z2} - \frac{1}{Z1}\right) \text{ rad.}$$

In the above example it is

$$\Delta P = \frac{2\pi}{Z1(Z1-1)} \text{ rad}$$

and teeth of the gears 1a and 5a have a section in the form of an isosceles triangle (Figure 3).

The disk 23 (Figure 1) is made of elastic steel and has such a thickness as to be easily yieldable in the direction parallel to the axis a. Particularly when at rest, the disk 23 holds the teeth of the gear 5a apart from those of the gear 1a, as shown in the lower part of Figure 1.

Secured to the shaft 3 of the motor is a hub 25 integral to a support disk 2 parallel to the rigid disk 1. The hub 25 is located within the box 11 and is rotatably mounted in the hollow portion 18 of the member 5. The bottom 13 of this box 11 is provided with a circular aperture 26 crossed by the hub 25 and the shaft 3 and is tightened on the hub 25 by means of a gasket 27. The box 11 can be filled with a lubricant liquid to reduce the friction of the parts moving therein.

The support disk 2 is provided with a pair of radially aligned projections 2a and 2b rotatably supporting a revolving element in the form of a roller 4 (Figures 2 and 3). This roller 4 is adapted to engage the face of the flexible disk 5 opposite the gear 5a to cause a limited sector of the gear 5a to yield and to mesh with the gear 1a until the disk 23 is arrested by the ring 31. Since the meshing sector of the two gears 5a and 1a is so limited, the difference in the two pitches is not cumulative and has practically no influence on the correct engagement of the teeth of the two gears 5a and 1a.

The support disk 2 is rotatably connected to the bottom 13 of the box 11 by a rolling element bearing formed of a set of radial rollers 6 housed in a depression 28 of the inner surface of the bottom 13. The support disk 2 is also rotatably connected to the flexible disk by another rolling element bearing having radially arranged rollers 29, while a third rolling element bearing having axially arranged rollers 30 is provided between the hub 25 and the inner surface of the hollow portion 18.

The motion transmitting device operates as follows.

The motor shaft 3 rotates the disk 2, which brings the roller 4 to revolve on the face of the flexible disk 23 opposite the gear 5a, thus causing the continuous shifting of the sector thereof meshing with the gear 1a. Due to the difference of pitch ΔP, the gear 5a rotates with respect to the stationary gear 1a such that, after one revolution of the disk 2, the gear 5a and the shaft 5b are rotated by an angle

$$\Delta P \cdot Z1 = \left(\frac{2\pi}{Z2} - \frac{2\pi}{Z1}\right).$$

$$Z1 = 2\pi\left(\frac{Z1}{Z2} - 1\right) \text{ rad.}$$

This rotation occurs in the same direction as that of the shaft 3 if Z1>Z2, whereas if Z1<Z2 the shaft 5b is rotated in the direction opposite that of the shaft 3.

The motion reduction ratio is T=ΔP · Z1:2π, that is

$$T = \frac{Z1}{Z2} - 1.$$

In the above case in which Z2=Z1−1, the ratio is

$$T = \frac{1}{Z2},$$

whereby a very high reduction ratio is easily obtained. In such a device the lost motion between the shafts 3 and 5b is limited to the gap between the engaging surfaces of the teeth of the gears 1a and 5a, since the rolling element bearings provide no additional lost motion to the connection.

It should be evident that modifications and the addition of parts can be made to the described motion transmitting device without departing from the scope of the invention. For example, the rigid disk 1 could be moved in a controlled way to alter the reduction ratio of the two gears 5a and 1a during operation. Furthermore, the disk 23, instead of being integral with the hollow cylindrical portion 18, can be made of a separate disk, which could be secured by suitable means to the portion 18. In any case, the disk 23 can be deprived of corrugations 24 and therefore be completely flat, while the distancing ring 31 can be removed. Finally, two or more rollers 4 can be provided angularly equidistant on the disk 2, the two gears 5a and 1a having a difference in number of teeth equal to or a multiple of the number of rollers 4. At any rate, the roller or rollers 4 can be replaced by balls suitably carried by the disk 2, while one or more bearings 6, 29 and 30 can be replaced by ball bearings.

## Claims

1. A motion transmitting device between a motor shaft (3) rotated by an electric motor and a driven shaft (5b) coaxial with said motor shaft, comprising a frame (10) housing said electric motor, a stationary rigid disk (1) having an annular portion (1a) toothed with a predetermined pitch, a relatively flexible disk (23) secured to said driven shaft and having an annular portion (5a) toothed with a pitch slightly different from said predetermined pitch, the flexible disk being located in such a position as to hold its toothed annular portion (5a) normally disengaged from the toothed annular portion (1a) of said rigid disk, a member (2) secured to said motor shaft and carrying at least one roller (4) rotatable on an axis substantially parallel to the plane of the annular portion of said rigid disk to engage the face of said flexible disk opposite its annular portion for causing a sector of said flexible disk to yield in a direction perpendicular to said plane and to engage a corresponding sector of the annular portion of said rigid disk, characterized in that a cylindrical box (12) is provided with an integral bottom (13) secured to the frame (10) of said electric motor coaxially with said motor shaft, and is further provided with an open edge (14) at the top face, said rigid disk (1) being secured to said open edge (14) of said box so as to tightly close said box, said box (12) housing said flexible disk (23), said member (2) and said roller (4), and in that a hollow portion (18) integral with said flexible disk and secured to said driven shaft (5b) houses a portion of said motor shaft, a cylindrical sleeve (19) on said rigid disk (1) rotatably supporting said hollow portion (18) and being sealed by a gasket means (22).

2. A device according to claim 1, characterized in that said flexible disk (23) is made of elastic steel and includes an annular portion (24) with concentric corrugations.

3. A device according to claim 1 or 2, characterized in that said member (2) is formed of a support disk (2) parallel to said bottom (13), a pair of radially aligned projections (2a, 2b) integral with said support disk rotatably supporting said roller (4), and a set of radially arranged rollers (6) housed in an annular depression (28) of said.bottom (13) for rotatably mounting said support disk (2) on said bottom (13).

4. A device according to claim 3, characterized by a hub portion (25) secured to said support disk (2) and non-rotatably secured to said motor shaft (3), said hub portion (25) being rotatably mounted within said hollow portion (18).

5. A device according to claim 4, characterized by a first rolling element bearing (20) for rotatably mounting said hollow portion (18) within said cylindrical sleeve (19), and second rolling element bearings (29, 30) for rotatably mounting said flexible disk on said support disk.

6. A device according to claim 5, characterized in that said hub portion (25) enters a circular aperture (26) in the bottom (13) of said box (11), said box being filled with a lubricant liquid.

7. A device according to claim 5 or 6, characterized in that said second rolling element bearings (29, 30) include a first bearing having axially arranged rollers (30) mounted between said hub and said hollow portion, and a second bearing having radially arranged rollers (29) mounted between ring portions of said rigid disk (2) and of said flexible disk (23).

## Patentansprüche

1. Vorrichtung zur Übertragung einer Bewegung zwischen einer von einem Elektromotor drehangetriebenen Motorwelle (3) und einer zu der Motorwelle koaxialen, angetriebenen Welle (5b), mit einem Rahmen (10) zur Aufnahme des Elektromotors, einer feststehenden, starren Scheibe (1), die einen mit einer vorgegebenen Schräge gezahnten Ringabschnitt (1a) aufweist, einer relativ biegsamen Scheibe (23), die an der angetriebenen Welle angeschlossen ist, und einen Ringabschnitt (5a) mit einer Zahnung aufweist, deren Schräge geringfügig verschieden ist von besagter, vorgegebener Schräge, wobei die biegsame Scheibe in einer solchen Stellung angeordnet ist, daß ihr gezahnter Ringabschnitt (5a) normalerweise vom gezahnten Ringabschnitt (1a) der starren Scheibe ausgerückt ist, einem Teil (2), der an der Motorwelle angeschlossen ist und mindestens eine Walze (4) trägt, die auf einer Achse drehbar ist, die im wesentlichen parallel zur Ebene des Ringabschnitts der starren Scheibe verläuft, um an der Fläche der biegsamen Scheibe anzugreifen, die ihrem Ringabschnitt gegenüberliegt, um einen Sektor der biegsamen Scheibe in einer Richtung lotrecht zu besagter Ebene auszulenken, und um an einem entsprechenden Sektor des Ringabschnitts der starren Scheibe anzugreifen, dadurch gekennzeichnet, daß ein Zylindergehäuse mit einem an dem Rahmen (10) des Elektromotors koaxial mit der Motorwelle angeschlossenen integralen Boden (13) und zusätzlich mit einer durchbrochenen Kante (14) an der Oberseite vorgesehen ist, wobei die starre Scheibe (1) an die durchbrochene Kante (14) des Zylindergehäuses angeschlossen ist, um dieses Gehäuse dicht zu verschließen, das die biegsame Scheibe (23), das Teil (2) und die Walze (4) aufnimmt, und daß ein mit der biegsamen Scheibe (23) integraler und an die angetriebene Welle (5b) angeschlossener Hohlkörper (18) einen Abschnitt der Motorwelle aufnimmt, wobei eine Zylinderbuchse (19) auf der starren Scheibe (1) den Hohlkörper (18) drehbar aufnimmt, die durch eine Dichtungseinrichtung (22) abgedichtet ist.

2. Vorrichtung nach Anspruch 1, dadurch gekennzeichnet, daß die biegsame Scheibe (23) aus elastischem Stahl besteht und einen Rinagabschnitt (24) mit konzentrischen Rillen aufweist.

3. Vorrichtung nach Anspruch 1 oder 2, dadurch gekennzeichnet, daß der Teil (2) aus einer Tragescheibe (2) parallel zu dem Boden (13) besteht sowie aus einem Paar radial ausgerichteter und mit der Tragescheibe integraler Vorsprünge (2a, 2b) zur Drehlagerung der Walze (4), und einem Satz radial angeordneter Walzen (6), die in einer Ringvertiefung (28) des Bodens (13) zur Drehlagerung der Tragescheibe (2) an dem Boden (13) aufgenommen sind.

4. Vorrichtung nach Anspruch 3, gekennzeichnet durch einen Nabenteil (25), der an die Tragescheibe (2) angeschlossen sowie nicht drehbar an die Motorwelle (3) angeschlossen ist, wobei der Nabenteil (25) innerhalb des Hohlkörpers (18) drehgelagert ist.

5. Vorrichtung nach Anspruch 4, gekennzeichnetes durch ein erstes Wälzelementelager (20) zur Drehlagerung des Hohlkörpers (18) innerhalb der Zylinderbuchse (19) und zweite Wälzelementelager (29, 30) zur Drehlagerung der biegsamen Scheibe auf der Tragescheibe.

6. Vorrichtung nach Anspruch 5, dadurch gekennzeichnet, daß der Nabenteil (25) in eine Kreisöffnung (26) am Boden (13) des Gehäuses (11) eintritt, welches mit einer Schmierflüssigkeit gefüllt ist.

7. Vorrichtung nach Anspruch 5 oder 6, dadurch gekennzeichnet, daß die zweiten Wälzelementelager (29, 30) ein erstes Lager mit axial angeordneten Walzen (30) umfassen, die zwischen dem Nabenteil und dem Hohlkörper angeordnet sind, sowie ein zweites Lager mit radial angeordneten Walzen (29), die zwischen Ringabschnitten der starren Scheibe (2) und der biegsamen Scheibe (23) angeordnet sind.

**Revendications**

1. Dispositif de transmission de mouvement entre un arbre moteur (3), entraîné en rotation par un moteur électrique, et un arbre entraîné (5b) coaxial audit arbre moteur, comprenant un carter (10) dudit moteur électrique, un disque rigide fixe (1) comportant une partie annulaire (1a) à denture de pas prédéterminé, un disque relativement flexible (23) fixé audit arbre entraîné et comportant une partie annulaire (5a) à denture de pas légèrement différent dudit pas prédéterminé, le disque flexible étant placé dans une position telle que sa partie annulaire dentée (5a) est normalement maintenue dégagée de la partie annulaire dentée (1a) dudit disque rigide, une pièce (2) fixée audit arbre moteur et portant au moins un rouleau (4) qui peut tourner sur un axe sensiblement parallèle au plan de la partie annulaire dudit disque rigide de manière à attaquer la face dudit disque flexible opposé à sa partie annulaire pour provoquer une déformation d'un secteur dudit disque flexible dans une direction perpendiculaire audit plan et à amener ce secteur en engrènement avec un secteur correspondant de la partie annulaire dudit disque rigide, caractérisé en ce qu'une boîte cylindrique (12) est prévue et comporte un fond solidaire (13) fixé au carter (10) dudit moteur électrique, coaxialement audit arbre moteur, et comporte en outre un bord ouvert (14) à la face supérieure, ledit disque rigide (1) étant fixé audit bord ouvert (14) de ladite boîte de manière à fermer ladite boîte de façon étanche, ladite boîte (12) contenant ledit disque flexible (23), ladite pièce (2) et ledit rouleau (4), et en ce qu'une partie creuse (18) solidaire dudit disque flexible et fixée audit arbre entraîné (5b) reçoit une partie dudit arbre moteur, un manchon cylindrique (19) dudit disque rigide (1) supportant de façon tournante ladite partie creuse (18) et son étanchéité étant assurée par un joint (22).

2. Dispositif suivant la revendication 1, caractérisé en ce que ledit disque flexible (23) est fabriqué en acier élastique et comprend une partie annulaire (24) à ondulations concentriques.

3. Dispositif suivant la revendication 1 ou 2, caractérisé en ce que ladite pièce (2) est formée sur un disque support (2) parallèle audit fond (13), deux oreilles radialement alignées (2a, 2b) solidaires dudit disque support supportant de façon tournante ledit rouleau (4), et un ensemble de rouleaux disposés radialement (6) étant logés dans une dépression annulaire (28) dudit fond (13) pour tenir de façon tournante ledit disque support (2) sur ledit fond (13).

4. Dispositif suivant la revendication 3, caractérisé par un moyeu (25) fixé audit disque support (2) et fixé de façon non tournante audit arbre moteur (3), ledit moyeu (25) étant monté de façon tournante à l'intérieur de ladite partie creuse (18).

5. Dispositif suivant la revendication 4, caractérisé par un premier roulement de portée (20), pour tenir de façon tournante ladite partie creuse (18) à l'intérieur dudit manchon cylindrique (19), et des deuxièmes roulements de portée (29, 30) pour tenir de façon tournante ledit disque flexible sur ledit disque support.

6. Dispositif suivant la revendication 5, caractérisé en ce que ledit moyeu (25) pénètre dans une ouverture circulaire (26) du fond (13) de ladite boîte (11), ladite boîte étant remplie avec un lubrifiant liquide.

7. Dispositif suivant la revendication 5 ou 6, caractérisé en ce que lesdits deuxièmes roulements de portée (29, 30) comprennent un premier roulement à rouleaux axiaux (30), monté entre ledit moyeu et ladite partie creuse, et un deuxième roulement à rouleaux radiaux (29) monté entre des parties annulaires dudit disque rigide (2) et dudit disque flexible (23).

0 148 809

_Fig.2_

_Fig. 3_

_Fig. 1_

1